# EUROPÄISCHE PATENTSCHRIFT

(11) **EP 2 859 283 B1**
(45) Veröffentlichungstag und Bekanntmachung des Hinweises auf die Patenterteilung: **27.07.2022**
(21) Anmeldenummer: 13728329.7
(22) Anmeldetag: 17.05.2013
(51) Int. Cl.: F25C 1/00

(54) **BINÄREISHERSTELLUNGSVORRICHTUNG UND VERFAHREN HIERZU**
ICE SLURRY PRODUCING APPARATUS AND METHOD THEREFOR
DISPOSITIF ET PROCÉDÉ DE PRODUCTION DE GLACE BINAIRE

(30) Priorität: 23.05.2012 DE 102012104429
(43) Veröffentlichungstag der Anmeldung: 15.04.2015
(73) Patentinhaber: Hubert Langheinz EVL, 72181 Starzach (DE)
(72) Erfinder: LANGHEINZ, Hubert, 72181 Starzach (DE)
(74) Vertreter: Sebastian, Jens
(86) Internationale Anmeldenummer: PCT/EP2013/060242
(87) Internationale Veröffentlichungsnummer: WO 2013/174747

(56) Entgegenhaltungen:
- WO-A1-2006/102743
- WO-A1-2006/102743
- DE-C1- 19 938 044
- DE-C1- 19 938 044
- US-A- 3 869 870
- US-A- 3 869 870

## Beschreibung

Die Erfindung betrifft ein Verfahren zur Herstellung von Binäreis aus einer Binäreissole gemäß Anspruch 1.

Auch betrifft die Erfindung eine Binäreisherstellungsvorrichtung zur Herstellung von Binäreis aus einer flüssigen Binäreissole gemäß Anspruch 8.

Weiter betrifft die Erfindung ein Energiesystem, insbesondere ein Klimatisierungssystem zum Klimatisieren von Räumen oder Erwärmen von Brauchwasser, als Energiequelle für Wärmepumpensysteme, bei dem Energie und/oder Wärme in bzw. aus einem latenten Wärmespeicher gespeichert und/oder gezogen wird, gemäß Anspruch 11.

Binäreis, Verfahren und Vorrichtungen zu dessen Herstellung sind allgemein bekannt. Dabei wird Binäreis auch als Eisbrei, Slurry, Slusheis, Matscheis, pumpfähiges Eis, flüssiges Eis und dergleichen bezeichnet.

Aus der DE 34 86 374 T2 ist eine Eisherstellungsmaschine bekannt, umfassend: ein Gehäuse mit einem Einlass zum Aufnehmen einer Füssigkeit in Form einer wässrigen Lösung von einer Konzentration, die unterhalb ihrer eutektischen Konzentration liegt, aus welchem das Eis herzustellen ist, mit einem Auslaß zum Ermöglichen des Austretens von Eis aus dem Gehäuse; einen Wärmetauscher im Gehäuse, mit einem Kühlmitteleinlass und einem Kühlmittelauslass zum Ermöglichen einer Strömung von Kühlmitteln zwecks Abziehens von Wärme aus der Flüssigkeit und wenigstens eine Wärmetauscherfläche enthaltend, die das Kühlmittel von der Flüssigkeit trennt; einen Schaber, der im Gehäuse angeordnet, um eine Achse beweglich ist, wobei sich der Schaber und die genannte jeweilige Wärmetauscherfläche quer zu der genannten Achse erstrecken; Mittel zum Aufnehmen eines Flüssigkeitsquantums im Gehäuse, um das Gehäuse im Wesentlichen anzufüllen und die jeweilige Wärmetauscherfläche zu bedecken, wobei der Schaber mit der jeweiligen Wärmetauscherfläche in Berührung steht und um die Achse herum bewegbar ist, um die jeweilige Wärmetauscherfläche abzuschaben, und dass die Eisherstellungsmaschine ferner umfaßt: einen Antrieb, der den Schaber antreibt und über die genannte Wärmetauscherfläche bei einer solchen Geschwindigkeit bewegt, dass der Schaber bei aufeinanderfolgenden Umläufen über der jeweiligen Wärmetauscherfläche diese abschabt, um eine gekühlte Schicht der Flüssigkeit von der jeweiligen Wärmetauscherfläche vor der Kristallisation des Eises hierauf abschabt, wobei der Schaber Flüssigkeit von der jeweiligen Wärmetauscherfläche dem Flüssigkeitsquantum im Gehäuse zuführt, um dort eine im Wesentlichen gleichförmige Temperatur aufrechtzuerhalten.

Aus der WO 2006/102743 A1 ist eine Eiserzeugungsmaschine bekannt,, die aufweist: ein Gehäuse mit einem Eintritt, um eine Flüssigkeit aufzunehmen, aus der Eis hergestellt werden soll, und einem Austritt, um den Ausfluss von Eis aus dem Gehäuse zu gestatten; einen Wärmetauscher mit mindestens einer Wärmetauscheroberfläche, einem Kältemitteleintritt, einem Kältemittelaustritt und mindestens einem Kältemittelkanal, der den Kältemitteleintritt und den Kältemittelaustritt verbindet, um einen Strom des Kältemittels durch den Wärmetauscher zu gestatten, um Wärme aus der Flüssigkeit herauszuziehen, die die mindestens eine Wärmetauscheroberfläche kontaktiert; mindestens eine Schaufel in Kontakt mit der mindestens einen Wärmetauscheroberfläche und über die mindestens eine Wärmetauscheroberfläche beweglich, um die abgekühlte Flüssigkeit davon zu entfernen; einen Antrieb, der die Schaufel über die Wärmetauscheroberfläche bewegt; eine Sensorbaugruppe, die die Eiskristallbildung auf der Wärmetauscheroberfläche nachweist; und eine Verarbeitungsvorrichtung, die mit der Sensorbaugruppe in Verbindung steht, wobei die Verarbeitungsvorrichtung die Eiserzeugungsmaschine konditioniert, um in einer Weise zu funktionieren, dass gestattet wird, dass die gebildeten Eiskristalle von der Wärmetauscheroberfläche beim Nachweis der Eiskristallbildung auf der Wärmetauscheroberfläche entfernt werden, wobei die Sensorbaugruppe eine Veränderung bei dem Ton erfasst, der durch die Eiserzeugungsmaschine erzeugt wird, um dadurch die Eiskristallbildung auf der Wärmetauscheroberfläche nachzuweisen.

Aus der US 3 869 870 A ist ein System bekannt, mit einer ersten Substanz, die sowohl in flüssiger als auch in fester Phase vorliegen kann und einen Gefrierpunkt unter etwa 60 °F aufweist; eine zweite Substanz, die sowohl in flüssiger als auch in fester Phase vorliegen kann und einen Gefrierpunkt aufweist, der wesentlich unter dem Gefrierpunkt der ersten Substanz liegt und mit der ersten Substanz nicht mischbar ist, wenn sich beide in der flüssigen Phase befinden; Mittel zum Abkühlen der ersten Substanz auf eine Temperatur unterhalb ihres Gefrierpunkts, um eine Zustandsänderung von flüssig zu fest zu bewirken; Mittel zum Mischen der resultierenden festen ersten Substanz mit der zweiten Substanz in flüssiger Phase; Mittel zum Zirkulieren des resultierenden Gemisches zu einer Kühllast, um Wärme davon durch die Zustandsänderung der ersten Substanz von fest zu flüssig zu abstrahieren; und Mittel zum Trennen der ersten und zweiten Substanz.

Aus der DE 199 38 044 C1 ist ein Eisgenerator zur Erzeugung einer wässrigen Suspension aus Einkristallen bekannt. Der Eisgenerator besteht aus einem Wärmetauscher mit mehreren Rohren für einen wässrigen Kälteträger, die annähernd geradlinig nebeneinander in einem Behältnis für ein Kältemittel verlaufen. Weiterhin ist ein Mechanismus zum Entfernen von an Innenwandungen der Rohre niedergeschlagenem Eis vorgesehen. Der Mechanismus umfasst in den Rohren verlaufende Abstreifeinrichtungen sowie einen Antrieb für die Abstreifeinrichtungen. Die Abstreifeinrichtungen sind aus entlang der Rohrachsen miteinander verbundenen Abstreifelementen gebildet, deren Umfang im Wesentlichen dem Innenumfang der Rohre entspricht, und die einen Durchlass für den Kälteträger aufweisen. Die Abstreifeinrichtungen sind mit dem Antrieb verbunden, der diese zur wiederkehrenden Hubbewegung entlang der Rohrachsen antreibt. Mit dem Eisgenerator kann eine höhere Eiserzeugungsleistung pro Bauvolumen erreicht werden als mit bekannten Geräten auf Basis von Rohrbündel-Wärmetauschern.

Es ist eine Aufgabe der vorliegenden Erfindung, ein Verfahren und eine Binäreisherstellungsvorrichtung zu schaffen, bei welchem ein Binäreis homogener und effizienter erzeugt wird. Zudem ist es eine Aufgabe, das Binäreis bzw. das Verfahren und die Vorrichtung zu dessen Herstellung für ein Klimatisierungs- oder Energiesystem mit Binäreis als latentem Engergiespeicher zu verwenden.

Diese und weitere Aufgaben werden ausgehend von einem Verfahren gemäß Anspruch 1, einer Binäreisherstellungsvorrichtung gemäß Anspruch 8, und einem Energiesystem oder einem Klimatisierungssystem gemäß Anspruch 11 . Vorteilhafte Weiterbildungen der Erfindung sind in den abhängigen Ansprüchen angegeben.

Die Erfindung schließt die technische Lehre ein, dass bei einem Verfahren zur Herstellung von Binäreis aus einer Binäreissole, umfassend die Schritte: Einfüllen der flüssigen Binäreissole in ein Gehäuse, Kühlen der flüssigen Binäreissole bzw. des bereits hergestellten Binäreises mittels Kontaktieren einer in dem Gehäuse angeordneten Wärmetauschereinrichtung oder allgemeiner einer Kühleinrichtung unter Rühren, insbesondere kontinuierlichem Rühren, der Binäreissole, um so das Binäreis zu erzeugen, wobei das Kühlen bei Bildung einer Eisschicht an der Wärmetauschereinrichtung unterbrochen wird, sobald die Eisschicht eine vorbestimmte Dicke erreicht und das Kühlen fortgeführt wird, sobald die Eisschicht die vorbestimmte Dicke unterschreitet, vorgesehen ist, dassdie Wärmetauschereinrichtung Wärmetauscherplatten umfasst, wobei die Kühlung der Binäreissole durch Kontaktierung von Wärmetauscheroberflächen der Wärmetauscherplatten erfolgt, wobei das Rühren mittels einer Rühreinrichtung erfolgt, wobei die Rühreinrichtung einen Rührantrieb umfasst, wobei der Rührantrieb eine Rührwelle und einen die Rührwelle antreibenden Rührmotor umfasst, wobei beim Rühren die Binäreissole und/oder Eis radial entlang der Wärmetauscheroberflächen nach außen weg von der Rührwelle in Richtung einer Behälterwandung bewegt wird, wobei die Rührwelle zentrisch zu den Wärmetauscherplatten angeordnet ist, wobei die Rührwelle radial nach außen abragend Rührelemente aufweist, wobei hierzu die Wärmetauscherplatten jeweils eine zentrische Durchgangsöffnung aufweisen, wobei das Rühren kontaktlos zu den Wärmetauscheroberflächen stattfindet, wobei die Rührelemente in den Zwischenräumen zwischen den Wärmetauscherplatten angeordnet sind, und wobei die Rührelemente schaufelartig ausgebildet sind. Das Binäreis wird aus einer flüssigen Binäreissole hergestellt. Hierzu wird eine Binäreissole mit einem vorbestimmten Prozentsatz an Salz hergestellt. Vorzugsweise umfasst die Binäreissole als Bestandteile Wasser, beispielsweise Leitungswasser, und ein Salz, beispielsweise Kochsalz, NaCl oder dergleichen. Die Binäreissole wird bevorzugt als eine etwa 0,01 - 10%-ige Binäreissole, bevorzugt als eine etwa 0,5 - 4,5 %-ige Binäreissole und am meisten bevorzugt als eine etwa 1,0 - 3,5 %-ige Binäreissole gemischt. Um eine gewünschte Binäreissole mit einem entsprechenden Mischverhältnis bereitzustellen, wird eine gesättigte Kochsalzlösung der Binäreislösung bereitgestellt. Wird beispielsweise NaCl und H₂0 als Binäreissole verwendet, so wird in einem Schritt eine gesättigte Lösung NaCl + H₂0 bereitgerstellt bzw. gemischt. Weiter wird davon getrennt eine weitere Binäreissole bereitgestellt. Bei der weiteren Binäreissole wird zunächst ein gewünschtes Lösungsverhältnis von NaCl und H₂0 erfasst. Weist die Lösung einen zu hohen Natriumchlorid- (NaCl) oder allgemein Salzanteil auf, so wird H₂0 hinzugefügt. Weist die Lösung einen zu hohen H₂O-Gehalt auf, so wird der weiteren Binäreissole ein Teil der gesättigten Binäreissole hinzugefügt. Bevorzugt erfolgt diese Niveauregulierung automatisch bzw. über einen Regelkreis gesteuert. Dabei wird ein gewünschter Konzentrationswert eingestellt. Der Konzentrationswert wird ermittelt. Bei Über- bzw. Unterschreiten wird ein gewünschter Bestandteil hinzugefügt, beispielsweise aus der gesättigten Lösung oder einer ungesättigten und/oder niederkonzentrierten Lösung. Ist ein gewünschter Konzentrationswert erreicht, wird die Binäreissole einem Behälter zugefügt, in welchem das Kühlen stattfindet. Der Behälter ist vorzugsweise zylindrisch ausgeführt, in einer anderen Form ist er konisch ausgeführt. Vorzugsweise ist der Behälter entsprechend der Mediumstemperatur und der Umgebungstemperatur isoliert um Transmissionswärmeverluste und Taupunktunterschreitung zu verhindern. In einer anderen Ausführung ist der Behälter doppelwandig ausgeführt um weitere Wärmetauscherfläche an der Innenwandung zu schaffen. Der Behälter ist vorzugsweise als Kühlbehälter ausgeführt, in einer anderen Ausführung ist er als Heizbehälter oder als Kühl- und Heizbehälter ausgeführt. Dabei wird in einem Schritt die Binäreissole vor dem Zufügen in den Behälter vorgekühlt. Ein Zufügen erfolgt bevorzugt gesteuert, insbesondere in Abhängigkeit von einem Füllstand des Behälters gesteuert. Bevorzugt ist das Zufügen derart gesteuert, dass ein gewünschter Füllstand eingehalten wird. Sobald die Binäreissole mit dem gewünschten Konzentrationsverhältnis in dem Behälter zugefügt ist und diese somit den dort befindlichen Wärmetauscher an den entsprechenden Wärmetauscheroberflächen kontaktiert, beginnt die Kühlung der Binäreissole. Das Kühlen erfolgt gesteuert, beispielsweise temperaturgesteuert, zeitgesteuert, energiegesteuert, eisdickengesteuert oder dergleichen. Bevorzugt erfolgt das Kühlen unter permanentem Rühren der Binäreissole. Auf diese Weise wird von Anfang an eine gute Durchmischung der Binäreissole realisiert. Im Laufe des Kühlens der Binäreissole kommt es zu einer Kristallbildung und somit einer Eisschichtbildung an den Wärmetauscheroberflächen. Da das Rühren kontaktlos zu den Wärmetauscheroberflächen stattfindet, wird das Rühren zunächst nicht durch die Eisschicht blockiert. Das Rühren erfolgt allerdings auch in eng beabstandeter Nähe zu den Wärmetauscheroberflächen. Hierbei wird ein Abstand zwischen einer Rühroberfläche eines Rührelements und einer Wärmetauscheroberfläche derart gewählt, dass erst eine vorbestimmte Eisdicke ein Rühren blockieren kann. Der Abstand wird dabei so ausgewählt, dass dieser im Bereich von etwa 0,1 bis 60 Millimeter, bevorzugt im Bereich von etwa 0,1 bis 30 Millimeter und am meisten bevorzugt in einem Bereich von 0,1 bis 5 Millimeter liegt. Wird an der Wärmetauscheroberfläche eine Eisschicht mit einer Eisschichtdicke gebildet, die einen vorgegebenen Wert überschreitet, so wird das Kühlen unterbrochen, sodass das an der Wärmetauscheroberfläche gebildete Eis abtauen kann bzw. sich in der Binäreissole lösen kann. Sobald die Eisschichtdicke einen vorgegebenen Wert unterschreitet oder ein vorgegebenes Zeitfenster oder eine andere Steuergröße überschritten wird, wird das Kühlen forgesetzt. Dieser Prozess setzt sich solange fort, bis eine gewünschte Konsistenz an Binäreis erreicht wird. Das dann fertige Binäreis ist pumpfähig und wird über eine Zapfstelle aus dem Behälter entnommen.

Die Binäreisherstellungsvorrichtung ist ausgelegt für die Produktion von etwa 5 kg bis 20 t Binäreis pro Stunden, bevorzugt von 25 kg bis 250 kg.

Als Kühlmedium für das Kühlen mittels Wärmetauscher wird in einer Ausführungsform ein lebensmittelechtes Kühlmedium, beispielsweise lebensmittelechte Sole oder dergleichen verwendet. Hierdurch sind das Verfahren und die im Folgenden beschriebene Vorrichtung für die Herstellung von Binäreis im Lebensmittelbereich verwendbar. Bei einer evtl. Leckage kommt somit das lebensmittelechte Kühlmedium in Kontakt mit dem Binäreis, sodass hier keine Gefahr für Benutzer durch Kontamination entsteht. Ein Kältemittel zur Kühlung des Kühlemediums durchströmt hierbei einen Sekundärkreis. Statt eines lebensmittelechten Kühlmediums wird in anderen Anwendungsfällen, beispielsweise bei einer Kühlung von Beton oder dergleichen, eine technische Sole verwendet. Dabei wird als Kühlmedium allgemein ein Wasser-Frostschutz-Gemisch verwendet.

In einer anderen Ausführungsform wird für das Kühlen als Kühlmedium ein Kältemittel verwendet, sodass das Verfahren bzw. die Vorrichtung in einem Direktverdampferbetrieb oder als Direktverdampfer betrieben wird. Ein Kältemittel ist beispielsweise CO₂ oder dergleichen.

Erfindungsgemäß ist es vorgesehen, dass eine Schichtdickenerfassung durchgeführt wird. Die Schichtdickenerfassung wird auf verschiedene Weise durchgeführt, beispielsweise direkt, über eine direkte Messung der Schichtdicke, beispielsweise optisch, haptisch, mittels Schall- oder anderen Wellen, oder dergleichen, oder indirekt, beispielsweise durch Erfassung abgeleiter Größen. Bevorzugt wird die Schichtdickenerfassung indirekt durchgeführt. Beispielsweise wird die Schichtdickenerfassung über ein Rühren bzw. durch einen Abstand zwischen dem Eis und einem Rührelement durchgeführt. Ist die Eisschichtdicke zu stark, so wird das Rühren blockiert. Hierdurch erhöht sich der Widerstand für ein Rührwerk, welche das Rühren durchführt. Durch Erfassen des Widerstands kann abgeleitet werden, wann eine Eisschichtdicke zu stark ist. Entsprechend wird das Kühlen bei einer ausreichenden Widerstandserhöhung unterbrochen. Das Unterbrechen ist beispielsweise zeitgesteuert, eisschichtdickengesteuert, temperaturgesteuert oder dergleichen. Das Unterbrechen erfolgt beispielsweise für eine voreingestellte oder variable Zeitspanne. In einer anderen Ausführungsform erfolgt das Unterbrechen in Abhängigkeit von der Eisschichtdicke, in anderen Ausführungsformen in Abhängigkeit von dem Widerstand. Die Schichtdickenerfassung wird in einer Ausführungsform integriert mit dem Rühren durchgeführt.

Weiter Z ist es erfindungsgemäß vorgesehen, dass das Rühren kontaktlos zu der Wärmetauschereinrichtung erfolgt. Das Rühren erfolgt kontaktlos zu der Wärmetauschereinrichtung, insbesondere zu den Wärmetauscheroberflächen. Dabei erfolgt ein Rühren entlang der Wärmetauscheroberflächen, sodass eine gute Vermischung des an den Wärmetauscheroberflächen gebildeten Eis und der Binärsole realisiert wird. Bevorzugt erfolgt ein paralleles Rühren an mehreren Stellen. Das Rühren ist insbesondere als axiales und/oder radiales Rühren ausgebildet. Dabei erfolgt das Rühren in einer Ausführungsform in einer Ebene, beispielsweise einer Ebene parallel zu den Wärmetauscheroberflächen. Bevorzugt wird dabei die Binäreissole und /oder das Eis radial entlang der Wärmetauscheroberflächen nach außen bewegt. In einer anderen Ausführungsform erfolgt ein Rühren in mindestens eine weitere Richtung, beispielsweise senkrecht zu der vorstehend beschriebenen Richtung.

Eine andere Ausführungsform der vorliegenden Erfindung sieht vor, dass das Verfahren in einer Schräglage durchgeführt wird. Insbesondere wird für eine Durchführung des Verfahrens zumindest das Gehäuse geneigt. Hierbei wird das Gehäuse, die Wärmetauschereinrichtung und/oder die Rühreinrichtung bzw. das Rührwerk schräg ausgerichtet. Aufgrund der unterschiedlichen Eigenschaften des Binäreises, des Eises und der Binäreissole wird die Binäreissole bei einer Schräglage an den untersten Punkt bewegt des Gehäuses bewegt, beispielsweise aufgrund der Schwerkkraft. Das fertige Binäreis wird aufgrund der geringeren Dichte zu einem höheren Punkt bewegt. Auf diese Weise wird fertiges Binäreis an einer höheren Position angeordnet. Entsprechend wird noch nicht fertiggestelltes Binäreis, beispielsweise Binäreissole oder Binäreissole mit nicht gemischtem Eis, an einer tieferen Stelle oder Lage angeordnet. Durch entsprechendes Anordnen einer Zapfstelle an einer höheren Lage lässt sich so Binäreis dem Behälter entnehmen, bevor die gesamte Binäreissole in Binäreis umgewandelt ist. Auf diese Weise ist eine verbesserte Herstellung von Binäreis realisierbar, da sich früher Binäreis entnehmen lässt und somit aufgrund der Niveauregelung oder Füllstandregelung sich Binäreissole früher nachfüllen lässt. Die Schräglage wird beispielsweise über eine Regeleinheit gesteuert. So wird in einer Ausführungsform ein Winkelbereich von etwa 0° bis etwa 90°, bevorzugt von etwa 5° bis etwa 35° und am meisten bevorzugt ein Winkelbereich von etwa 10° bis etwa 20°, bevorzugt um 15° eingestellt. Andere Werte lassen sich ebenfalls einstellen. Die Schräglage wird in einer Ausführungsform während der Binäreisherstellung variiert. Beispielsweise ist die Schräglage zu Beginn eines Herstellungsprozesses größer und nimmt im Lauf des Prozesses ab. Entsprechend der gerade eingestellten Schräglage ist die Kühlung einstellbar. So erfolgt bei größerer Schräglage eine strärkere Kühlung, beispielsweise verstärkt im Bereich der tieferliegenden Wärmetauscheroberflächen. Entsprechend der Schräglage wird in einer Ausführungsform der Füllstand eingestellt. So ist bei größerer Schräglage beispielsweise der Füllstand geringer. Mit abnehmender Schräglage werden in einer Ausführungsform ursprünglich höher liegende Wärmetauscheroberflächen zu- und/oder abgeschaltet.

Wiederum eine andere Ausführungsform der vorliegenden Erfindung sieht vor, dass ein Fördern des Binäreises und/oder der Binäreissole in mindestens eine Richtung, bevorzugt in mehrere Richtungen, durchgeführt wird. Dabei ist eine bevorzugte Richtung vom Einlass zum Auslass des Binäreises bzw. der Binäreissole. Aufgrund der Schräglage wird das Fördern beispielsweise durch die Schwerkraft unterstützt. In anderen Ausführunsgformen sind Rühreinrichtungen oder Rührwerke vorgesehen, die beispielsweise über eine spiralförmige Bewegung, zum Beispiel mittels einer Förderschnecke, ein Fördern bewirken. Bevorzugt erfolgt ein Rühren entlang einer Ebene der entsprechenden Wärmetauscheroberfläche. Aufgrund der Schräglage oder Neigung und der unterschiedlichen Eigenschaften des Binäreises und der Binäreissole erfolgt eine Vermischung quer zu der Ebene, entlang welcher das Rühren erfolgt.

Zudem sieht eine Ausführungsform der vorliegenden Erfindung vor, dass das Kühlen parallel und/oder seriell an mehr als zwei Oberflächen der Wärmetauschereinrichtung durchgeführt wird. Zum Kühlen sind mehrere Oberflächen vorgesehen. Aufgrund einer Schräglage bzw. eines Schrägstellens, gerade auch eines variierenden Schrägstellens, erfolgt die Kühlung nicht konstant an einem gleichen Anteil aller Wärmetauscheroberflächen. Ein Teil der Kühlung erfolgt parallel. Bei veränderter Schrägstellung erfolgt das Kühlen nacheinander an einem veränderbaren Anteil der Wärmetauscheroberflächen. Bevorzgut lassen sich einzelne Wärmetauscheroberflächen zu- und/oder abschalten.

Außerdem sieht eine Ausführungsform der vorliegenden Erfindung vor, dass eine Niveauregelung durchgeführt wird. Die Niveauregelung umfasst eine Regelung eines Füllstandes des Behälters, eine Konzentration der Binäreissole und eine Schräglagenregelung. Insbesondere wird die Niveauregelung in Abhängigkeit verschiedener Größen wie Konzentrationsgrößen, Temperaturgrößen, Zeitgrößen, Winkelgrößen, Füllstandsgrößen und dergleichen durchgeführt. Abhängigkeiten der einzelnen Größen werden dabei bevorzugt erfasst. Die Regelung ist bevorzugt als selbstlernende Regelung ausgebildet. In einer Ausführungsform erfolgt eine selbsttätige Optimiertung aufgrund der erfassten Werte, der Ist-Werte und der Sollwerte, insbesondere in Abhängigkeit der Zielvorgaben.

Noch eine andere Ausführungsform sieht vor, dass das Kühlen mittels eines indirekten Wärmetauscherbetriebs durchgeführt wird. Hierbei werden ein Primärkreislauf und ein Sekundärkreislauf vorgesehen. In dem Primärkühlkreislauf zirkuliert beispielsweise eine lebensmittelechte Sole. In dem Sekundärkreislauf zirkuliert beispielsweise ein Kältemittel. In einer anderen Ausführungsform ist ein direkter Wärmetauscherbetrieb mit einem Kreislauf vorgesehen. In dem Kreislauf zirkuliert beispielsweise ein Kältemittel.

Zudem schließt die Erfindung die technische Lehre ein, dass bei einer Binäreisherstellungsvorrichtung zur Herstellung von Binäreis aus einer flüssigen Binäreissole, vorgesehen ist, dass Mittel zur Durchführung des erfindungsgemäßen Verfahrens vorgesehen sind, wobei die Mittel eine Wärmetauschereinrichtung umfassen, welche mehrere zueinander beabstandete und zumindest teilweise miteinander fluidisch verbunde Wärmetauscherplatten aufweist, wobei für ein Rühren nach außen dazwischen Rührelemente vorgesehen sind, die entsprechende Förder- oder Leitmittel aufweisen, wobei die Mittel eine Regeleinrichtung umfassen, um bei Überschreiten einer Binäreisschichtdicke die Wärmetauschereinrichtung herunterzuregeln und bei Unterschreiten der Binäreisschichtdicke die Wärmetauschereinrichtung heraufzuregeln, wobei eine zu der Wärmetauschereinrichtung beabstandete Rühreinrichtung zum Rühren der Binäreissole und/oder des Binäreises kontaktlos zu der Wärmetauschereinrichtung vorgesehen ist, wobei das Rühren mittels einer Rühreinrichtung erfolgt, wobei die Rühreinrichtung einen Rührantrieb umfasst, wobei der Rührantrieb eine Rührwelle und einen die Rührwelle antreibenden Rührmotor umfasst, wobei die Rührwelle zentrisch zu den Wärmetauscherplatten angeorndet ist, wobei die Rührwelle radial nach außen abragende Rührelemente aufweist, wobei hierzu die Wärmetaucherplatten jeweils eine zentrische Durchgangsöffnung aufweisen, und wobei die Rührelemente in den Zwischenräumen zwischen den Wärmetauscherplatten angeordnet sind und wobei die Rührelemente schaufelartig ausgebildet sind. Durch die Mittel ist eine verbesserte Binäreisherstellung, insbesondere eine schnellere, energieeffizientere und großproduktionsoptimierte Binäreisherstellung realisierbar. Gerade durch die flexible Ausführung einschließlich der Neigungs- bzw. Schräglagenveränderung ist eine effektive Binäreisherstellung realisiert. Insbesondere gewährleisten die Mittel eine kontinuierliche Binäreisherstellung.

Erfindungsgemäß ist es vorgesehen, dass die Mittel eine Wärmetauschereinrichtung umfassen, welche mehrere zueinander beabstandete und zumindest teilweise miteinander fluidisch verbundene Wärmetauscherplatten aufweist. Die Wärmetauschereinrichtung umfasst einen Wärme- bzw. Kühlmittelkreislauf, in dem ein Wärme- bzw. Kältemittel zirkulieren bzw. fließen kann. Der Kreislauf umfasst einen Zulauf und einen Ablauf. Fluidisch mit dem Zulauf und dem Ablauf verbunden sind die Wärmetauscherplatten. Die Wärmetauscherplatten werden in deren Innenraum von dem Kühlmittel durchströmt. Dabei ist in dem jeweiligen Innenraum ein Strömungsfeld ausgebildet, welches eine Strömung des Kühlmittels entsprechend definiert. Hierzu sind entsprechende Strömungsleitmittel in dem Innenraum angebracht. Diese umfassen Vorsprünge, Vertiefungen, Verengungen, Verbreiterungen, Wandungen und dergleichen. Der Innenraum wird durch entsprechende Wandungen begrenzt. Dabei bilden die seitlichen Wandungen flächenmäßig den größten Anteil an den Wandungen. Bevorzugt sind die Wärmetauscherplatten als im Querschnitt kreisförmige Platten bzw. kreisringförmige Platten mit zwei Seitenwänden und einer bzw. zwei Umfangswänden ausgebildet. Dabei weist die jeweilige Seitenwandung eine äußere Seite, die Wärmetauscheroberfläche, und eine innere Seite auf. Die Strömungsleitmittel erstrecken sich in einer Ausführungsform von einer inneren Seite zu der gegenüberliegenden inneren Seite. In einer anderen Ausführungsform erstrecken sich die Strömungsleitmittel nicht von einer inneren Seite zu der gegenüberliegenden inneren Seite, sondern ragen von einer Seite in Richtung der anderen Seite oder quer dazu ab, ohne die jeweils andere Seite zu kontaktieren. Die Strömungsleitmittel sind gleich und/oder unterschiedlich orientiert. Beispielsweise ist in dem Innenraum ein beliebiges Flowfield zur optimierten Strömung ausgebildet.

Erfindungsgemäβ weisen die Wärmetauscherplatten eine zentrale Durchgangsöffnung auf, durch die sich beispielsweise eine Achse oder eine Welle erstrecken kann. Bevorzugt sind die Wärmetauscherplatten konzentrisch zueinander ausgerichtet. In einer Ausführungsform weisen die Wärmetauscherplatten eine außerhalb der Wärmetauscherplatten liegende Verbindung zu dem Zulauf bzw. zu dem Ablauf auf, sodass der Zulauf bzw. der Ablauf radial außerhalb der Wärmetauscherplatten angeordnet ist. In einer anderen Ausführungsform ist eine zumindest teilweise in die Wärmetauscherplatten integrierte Aufnahme für zumindest einen Teil des Zulaufs und/oder des Ablaufs vorgesehen. Beispielsweise ist für den Zulauf und/oder den Ablauf je eine Durchgangsöffnung in der jeweiligen Wärmetauscherplatte vorgesehen. Entsprechend weist die jeweilige Wärmetauscherplatte eine innerhab der Wärmetauscherplatte liegende Verbindung zu dem Zulauf bzw. dem Ablauf auf. Bevorzugt sind mehrere Wärmetauscherplatten parallel zueinander entlang einer zumindest gedachten durch die Wärmetauscherplatten verlaufenden Achse ausgerichtet. Dabei sind die Wärmetauscherplatten bevorzugt rotationssymmetrisch zu der Achse ausgebildet. In anderen Formen sind exzentrische Formen vorgesehen. Die Wärmetauscherplatten sind in einer Auführungsform fest beabstandet zueinander angeorndet. Dabei sind die Wärmetauscherplatten bevorzugt gleich beabstandet zueinander ausgebildet. In anderen Ausführungsformen sind die Wärmetauscherplatten unterschiedliche zueinander beabstandet, beispieslweise mit unterschiedlichen Abständen. In einer anderen Ausführungsform sind die Wärmetauscherplatten veränderbar zueinander beabstandet. Beispielsweise lassen sich so die Wärmetauscherplatten enger zueinander anordnet oder weiter entfernt voneinander beabstanden. Insbesonder für einen Transport oder eine veränderte Schräglage während des Betriebs lassen sich hierdurch Vorteile erzielen. In einer Ausführungsform ist eine Arretierung zum Arretieren der jeweiligen Wärmetauscherplatte in einer Position vorgesehen.

Erfindungsgemäß ist es vorgesehen, dass die Mittel eine Regeleinrichtung umfassen, um bei Überschreiten einer Binäreisschichtdicke die Wärmetauschereinrichtung herunterzuregeln und bei Unterschreiten der Binäreisschichtdicke die Wärmetauschereinrichtung heraufzuregeln. Herunterregeln bzw. Heraufregeln bedeutet eine Leistung der Wärmetauschereinrichtung zu verändern, beispielswe eine Kühlleistung zu senken (Herunterregeln) oder anzuheben (Heraufregeln). Die Regeleinrichtung umfasst eine Eisschichtdickenerfassung.

Erfindungsgemäß ist es vorgesehen, dass eine zu der Wärmetauschereinrichtung beabstandete Rühreinrichtung zum Rühren der Binäreissole und/oder des Binäreises kontaktlos zu der Wärmetauschereinrichtung vorgesehen ist. Die Rühreinrichtung ist so ausgebildet, dass diese die Wärmetauschereinrichtung, insbesondere die Wärmtauscherplatten, nicht kontaktiert. Vorzugsweise weist die Rühreinrichtung eine Antriebseinheit, bevorzugt eine Antriebswelle, auf. Die Antriebswelle ist bevorzugt durch die zentrischen Durchgangsöffnungen der Wärmetauscherplatten angeordnet. Dabei ist die Antriebswelle beabstandet zu den Wärmetauscherplatten angeordnet. Radial von der Antriebswelle ragen Rührelemente ab, welche beabstandet zu den jeweiligen Wärmetauscherplatten angeordnet sind. Dabei sind die Rührelemente beispielsweise als Rührrechen ausgebildet. In einer anderen Ausführungsform sind die Rührelemente als Rührpaddel ausgebildet. In noch einer anderen Ausführungsform sind die Rührelemente als Rührstäbe ausgebildet. Wiederum eine andere Ausführungsform sieht vor, dass die Rührelemente als Rührbürsten ausgebildet sind, eine weitere Ausführungsform ist eine Kombination von diesen. Weitere Ausführungsformen der Rührelemente sind denkbar. Die Rührelemente werden in dem Zwischenraum zwischen zwei benachbarten Wärmetauscherplatten durch die Antriebswelle rotiert. Dabei drängen diese Binäreis bzw. Binäreissole radial nach außen. Durch den Abstand der Antriebswelle zu der jeweiligen Wärmetauscherplatte kann Binäreissole bzw. Binäreis nachrücken. Für ein Rühren nach außen weisen die Rührelemente entsprechende Förder- oder Leitmittel auf. Die Rühreinrichtung bzw. das Rührwerk ist mit der Regelung gekoppelt und/oder der Rühreinrichtung gekoppelt bzw. in diese zumindest teilweise integriert. Die Regelung übernimmt die Schaltung von Rührintervallen, Rührgeschwindigkeit etc. Als Regelgröße können Sole- und/oder Binäreiskonsistenz, Stromaufnahme, beispielsweise des Rührwerkmotors, Temperatur der Behälterwandung und/oder des Behälterinhalts etc. dienen.

Zudem ist in einer Ausführungsform der vorliegenden Erfindung vorgesehen, dass die Mittel eine Neigungsregulierung umfassen, um die Binäreisherstellungsvorrichtung zu neigen. Die Neigungsregulierung ist bevorzugt außen an dem Behälter angeordnet, in welchem die Wärmetauschereinrichtung und die Rühreinrichtung angeorndet sind. Beispielsweise um fasst die Neigungsregulierung eine oder mehrere ausfahrbare und/oder schwenkbare Standfüße, Halterungen oder dergleichen. In einer Ausführungsform ist eine Wiegeeinrichtung vorgesehen, auf welcher der Behälter angeordnet ist. Entsprehcend sind statt einfacher Standfüße Wiegefüße oder Wiegefühler vorgesehen. Auf diese Weise ist bei einem Abzapfen oder Zuführen von Binäreis bzw. Binäreissole eine Gewichtserfassung und/oder Gewichtsregulierung bzw. -steuerung realisierbar. Insbesondere ist so eine Dosiereinrichtung über eine Gewichtssteuerung realisierbar.In einer Ausführungsform ist eine Niveauerfassung vorgesehen, welche einen Neigungswinkel erfasst. In einer anderen Ausführungsform ist ein Antrieb, beispielsweise ein hydraulischer, pneumatischer oder sonstiger Antrieb vorgesehen.

Weiterhin ist in einer Ausführungsform der vorliegenden Erfindung vorgesehen, dass die Mittel eine Fördereinrichtung, vorzugsweise integriert in das Rührwerk, umfassen, um das Binäreis bzw. die Binäreissole zu fördern. Die Förderung erfolgt bevorzugt von einem Einlass zu einem Auslass. Beispielsweise liegen Einlass und Auslass nicht auf einem gemeinsamen Höhenniveau. Bevorzugt liegt der Auslass auf einem höheren Höhenniveau, sodass die Förderung bei einer entsprechenden Neigung in Richtung Ausgang erfolgt. Zudem schließt die Erfindung die technische Lehre ein, dass bei einem Energiesystem, insbesondere einem Klimatisierungssystem zum Klimatisieren von Räumen und/oder Erwärmen von Brauchwasser oder dergleichen, als Energiequelle für Wärmepumpensysteme, bei dem Energie und/oder Wärme in einem latenten Energie- bzw. Wärmespeicher gespeichert und/oder gezogen bzw. abgeführt wird, vorgesehen ist, dass eine erfindungsgemäße Binäreisherstellungsvorrichtung zur Durchführung eines erfindungsgemäßen Verfahrens umfasst ist, um als latenten Energie- bzw. Wärmespeicher Binäreis, insbesondere Binäreis, das mit der erfindungsgemäßen Binäreisherstellungsvorrichtung hergestellt ist, bereitzustellen.

In einer Ausführungsform wird die Vorrichtung für den Betrieb mit einer Wärmepumpe verwendet. Dabei entsteht beispielsweise das Binäreis als Abfallprodukt. Durch die Verwendung von Binäreis in einem derartigen System ist ein latenter Wärmespeicher mit einer hohen Energieleistung realisiert.

Bei der Verwendung einer Vorrichtung wird Wärme aus Sonnenstrahlen und/oder Wärme aus Umgebungsluft genutzt. Ein Teil der Wärme wird im Eiswasserspeicher gepuffert, wo die Wärme weitestgehend verlustfrei gespeichert wird. Dank des extrem hohen Wärmeübergangs im Wasser-/Eisspeicher weist dieser beispielsweise eine Fassungsvolumen von 300 bis 400 Litern auf. Im Sommer benötigt die Wärmepumpe keine oder nur sehr wenig Energie. Bei der Verwendung als Wärmevorrichtung umfasst die Wärmevorrichtung bevorzugt mindestens einen Hybridkollektor, eine Wärmepumpe, einen Flüssigeisspeicher und einen Wärmespeicher. Als Fküssigeisspeicher oder Wasser/Eisspeicher sind besonders platzsparende Energiespeicher vorgesehen. In Verbindung mit einer Wärmepumpe lässt sich Energie auf ein nutzbares Temperaturniveau z. B. für eine Raumheizung und/oder zur Warmwassererwärmung verwenden. Um so näher die benötigte Nutztemperatur beim Schmelzpunkt von Wasser liegt, um so höher ist der Wirkungsgrad und somit um so geringer auch ein Strom für die Wärmepumpe, um eine gewünschte Temperatur zu erreichen. Die Bauteile einer entsprechenden Wärmevorrichtung - der Eisspeicher, der Kollektor sowie die Wärmepumpe - sind auf den jeweiligen Wärmebedarf ausgelegt. Ein Absorber ist dauerhaft funktionsfähig, das heißt am Tag sowie auch nachts. Spezielle Hybridkollektoren nehmen selbst bei diffuser Helligkeit und bei Bewölkung noch ausreichend Wärme auf, um sie danach in nutzbare Wärme zu wandeln oder im (Flüssig-)Eisspeicher das Überangebot einzulagern. Während der Sommertage kann über Kollektoren direkt ohne Wärmepumpe die Warmwasserversorgung abgedeckt in dem die Wärme in den Pufferspeicher geleitet wird. Im Winter wird die Energie, wenn die Temperaturen der Kollektoren ausreichen, in die Heizung oder den Pufferspeicher geführt. Reichen die Temperaturen nicht aus, wird die Wärme über die Wärmepumpe auf nutzbare Temperaturen gebracht oder im Eisspeicher zwischengespeichert. Der Warmwasserspeicher hält die Wärme bereit, welche zur Bereitung des Warmwassers benötigt wird. Ein Heizen mit Eis bzw. Flüssigeis ist somit auf einfache Weise möglich. Heizen mit Eis basiert auf folgendem physikalischen Prinzip: Durch die Bildung von Kristallen durch Energieentzug bei der Eisbildung lässt sich die sogenannte Kristallisationswärme gewinnen. Beim Auftauen muss genau die gleiche Wärme wieder zugeführt werden. Dies kann beliebig oft wiederholt werden, was das Medium Wasser auszeichnet. Dabei dient der Wasser/Eisspeicher oder Flüssigeisspeicher nicht als richtige Wärmequelle sondern immer als Zwischenspeicher der beliebig oft be- und entladen wird. Dabei erfolgt eine Wärmeentnahme von dem Flüssigeisspeicher wie folgt: Über eine Wärmepumpe wird dem Wasser so lange Wärme entzogen bis sich Eis bildet. Die Wärmepumpe arbeitet - bei leistungsfähigen Eisspeicher-Wärmetauschern - bis zum vollständigen Einfrieren des Wassers mit der Gefriertemperatur von 0 Grad besonders effizient, da ihre Betriebstemperatur nicht absinkt. Eine große Oberfläche des Wärmetauschers und ein geringer Abstand der Wärmetauscherflächen von wenigen Zentimetern sind wichtig für eine hohe Wärmeübertragung im Hochleistungs-Eisspeicher. Die von der Wärmepumpe entzogene Wärme kann auf einer höheren (nutzbaren) Temperatur genutzt werden, in dem die Wärmepumpe diese Wärme an einen Pufferspeicher zur Heizung bzw. zur Wassererwärmung abgibt. Bevorzugt wird Flüssigeis verwendet, welches über die erfindungsgemäße Vorrichtung bereitgestellt wird. In dem Fall ist die Vorrichtung Bestandteil der Wärmevorrichtung. Die Wärmezuführung über den Eisspeicher erfolgt wie folgt: Die Zuführung von Energie bzw. Wärme an den Eisspeicher kann z. B. über Luft-Wärmetauscher mit Gebläse, Sonnenkollektoren oder eine Kombination daraus, sogenannte Hybridkollektoren erfolgen. Je effizienter die Kollektoren arbeiten, und z. B. auch bei Schnee in der Lage sind diesen zum Abrutschen zu bringen bzw. abzutauen um so kleiner kann der Eisspeicher sein. Für den Fall reicht die Auslegung für eine Nacht aus denn am nächsten Tag reicht sogar ein bedeckter Himmel, um über die Kollektoren wieder genügend Energie zu ernten. Statt oder eines Eisspeichers oder ergänzend dazu ist bevorzugt ein Flüssigeisspeicher vorhanden. Die Energie, welche während des Gefrierens dem Eis entzogen wird, lässt sich für Heizungswärme nutzen. Dieses birgt zwei wichtige Vorteile: Eisspeicher, insbesondere Flüssigeisspeicher sind relativ kostengünstig und äußerst platzsparend. Die Funktionsweise stellt sich folgendermaßen dar: Wird ein Liter Eis mit einer Temperatur von null Grad Celsius in Wasser verwandelt (aufgetaut), wird so viel Energie benötigt, wie während der Erwärmung von einem Liter Wasser mit einer Temperatur von null Grad Celsius auf achtzig Grad Celsius. Somit kann im gleichen Volumen im Vergleich zu einem Wasserspeicher die achtfache Energiemenge gespeichert werden. Durch die Mitwirkung einer Wärmepumpe kann Niedertemperatur-Energie nutzbar gemacht werden in dem sie auf entsprechende Temperaturen für die Heizung und Warmwassererwärmung gebracht wird. Durch die hohe Energiedichte lässt sich so viel Platz sparen Der Flüssigeisgenerator unterscheidet sich sehr stark in der Eissorte - fest gefrorenes Wasser bei der Eisheizung gegenüber flüssiger Eissole beim Flüssigeisgenerator -bei dem Verfahren der Herstellung des Eises. Bevorzugt wird hier Flüssigeis, binäres Eis oder pumpfähiges Eis verwendet. Mit dem Flüssigeisgenerator kann eine ganz ähnliche Art der Energie(rück)gewinnung und Speicherung praktiziert werden. Der Vorteil des flüssigen Eises ist das sehr schnelle auftauen schon bei geringer Wärmezufuhr. Somit kann der Flüssigeisgenerator als regenerative Wärmequelle für Wärmepumpen auch bei sehr niedrigen Temperaturen knapp über 0°C und bei schwacher Sonneneinstrahlung sehr gut eingesetzt werden.

Die Erfindung wird nachfolgend anhand von in den Zeichnungen dargestellten Ausführungsbeispielen näher erläutert. Für gleiche oder ähnliche Bauteile oder Merkmale werden dabei einheitliche Bezugszeichen verwendet. Merkmale oder Bauteile verschiedener Ausführungsformen können kombiniert werden, um so weitere Ausführungsformen zu erhalten.

Es zeigen:
- Fig. 1: schemtisch eine Querschnittsansicht einer Binäreisherstellungsvorrichtung;
- Fig. 2: schematisch einen Ausschnitt einer Binäreisherstellungsvorrichtung in einer anderen Querschnittsansicht;
- Fig. 3: schematisch die Binäreisherstellungsvorrichtung nach Fig. 2 in einer explosionsartigen Darstellung;
- Fig. 4: schematisch eine andere Querschnittsansicht der Binäreisherstellungsvorrichtung nach Fig. 3;
- Fig. 5: schematische eine perspektivische Ansicht einer Wärmetauschereinrichtung einer Binäreisherstellungsvorrichtung;
- Fig. 6: schematisch in einer Draufsicht die Wärmetauschereinrichtung nach Fig. 5;
- Fig. 7: schematische eine perspektivische Ansicht einer anderen Wärmetauschereinrichtung einer Binäreisherstellungsvorrichtung;
- Fig. 8: schematisch in einer Draufsicht die Wärmetauschereinrichtung nach Fig. 7;
- Fig. 9: schematisch in einer Seitenansicht eine Binäreisherstellungsvorrichtung;
- Fig. 10: schematisch in einer Vorderansicht und einer Seitenansicht einen Ausschnitt der Binäreisherstellungsvorrichtung nach Fig. 9;
- Fig. 11: schematisch in einer teilweise explosionsartigen Seitenansicht die Binäreisherstellungsvorrichtung nach Fig. 10;
- Fig. 12: schematisch in einer Querschnittansicht eine andere Binäreisherstellungsvorrichtung;
- Fig. 13: schematisch in einer anderen Querschnittsansicht die Binäreisherstellungsvorrichtung und
- Fig. 14: schematisch in einer perspektivischen Ansicht eine Wärmetauschereinrichtung der Binäreisherstellungsvorrichtung nach Fig. 13.

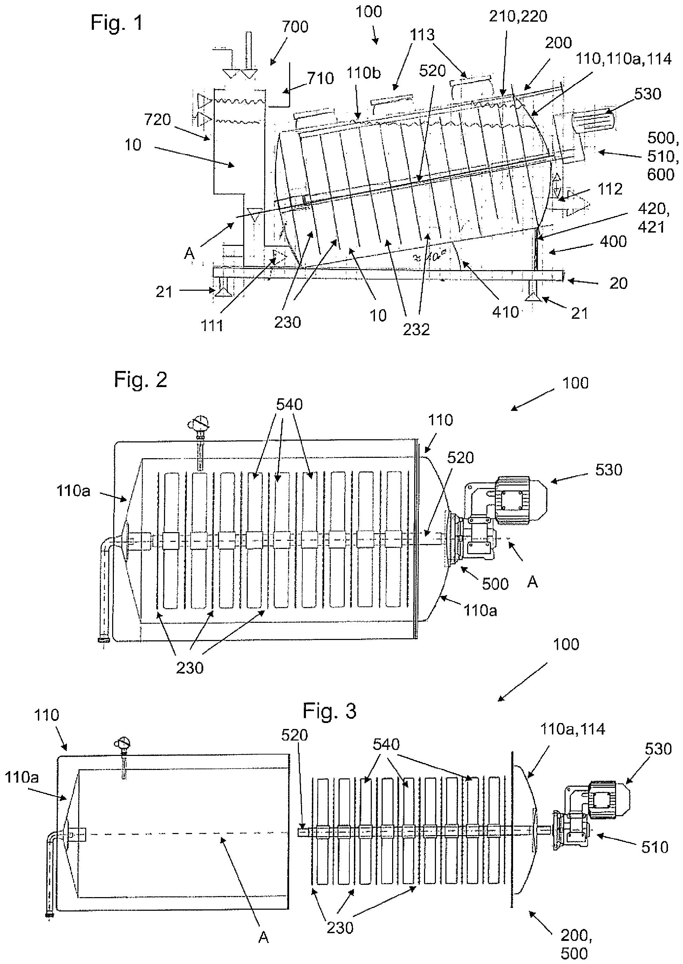

Die Fig. 1 bis 14 zeigen verschiedene Ausführungsformen einer Wärmetauschereinrichtung 100 in verschiedenen Ansichten und Detaillierungsgraden. Gleiche oder ähnliche Bauteile werden mit gleichen Bezugszeichen gekennzeichnet. Auf eine detaillierte Beschreibung bereits beschriebener Bauteile wird verzichtet.

Die Binäreisherstellunsgvorrichtung 100 zur Herstellung von Binäreis aus einer flüssigen Binäreissole weist Mittel zur Durchführung eines Verfahrens zur Herstellung von Binäreis aus einer Binäreissole 10 auf, wobei ein Einfüllen der flüssigen Binäreissole 10 in ein Gehäuse 110, ein Kühlen der flüssigen Binäreissole 10 mittels Kontaktieren einer in dem Gehäuse 110 angeordneten Wärmetauschereinrichtung 200 unter Rühren der Binäreissole 10 durchgeführt wird, um so das Binäreis zu erzeugen, wobei das Kühlen bei Bildung einer Eisschicht an der Wärmetauschereinrichtung 200 unterbrochen wird, sobald die Eisschicht eine vorbestimmte Dicke erreicht und das Kühlen fortgeführt wird, sobald die Eisschicht die vorbestimmte Dicke unterschreitet.

Die Binäreisherstellunsgvorrichtung 100 weist entsprechende Mittel auf, welche die Wärmetauschereinrichtung 200 umfassen. Weiter umfassen die Mittel eine Regeleinrichtung. Zudem umfassen die Mittel eine Rühreinrichtung 500. Außerdem umfassen die Mittel eine Neigungsregulierung 400. Weiter umfassen die Mittel eine Fördereinrichtung 600. Die Binäreisherstellungsvorrichtung 100 ist auf einem Boden oder einer Standfläche 20, die auch als Wiegeeinrichtung ausgebildet sein kann, angeordnet. Über die Neigungsregulierung 400 ist die Binäreisherstellungsvorrichtung 100 gegenüber der Standfläche 20 in eine Schräglage bringbar oder neigbar, wie in Fig. 1 dargestellt. Dabei ist über die Neigungsregulierung 400 ein Neigungswinkel 410 einstellbar, mit dem die Binäreisherstellungsvorrichtung 100 gegenüber der Standfläche 20 geneigt ist. Der Neigungswinkel 410 berechnet sich hier aus einer Schräglage des Gehäuses 110 der Binäreisherstellungsvorrichtung 100 bzw. einer Achse A der Binäreisherstellungsvorrichtung 100 gegenüber der Standfläche 20. Dabei umfasst die Neigungsregulierung 400 mindestens ein verstellbares Neigungselement 420, welches ausfahrbar ist. Das Neigungselement 420 ist hier als ausfahrbarer Standfuß 421 ausgebildet. Die Standfläche 20 ist bevorzugt Bestandteil der Neigungsregulierung 400. Für eine Auflage der Binäreisherstellungsvorrichtung 100 auf einer tragenden Struktur weist die Neigungsregulierung entsprechende Standfüße 21, die auch als Wiegefüße ausgebildet sein können, auf.

In dem Behälter 110 ist neben der Binäreissole 10 die Wärmetauschereinrichtung 200, zumindest teilweise, angeordnet. Die Wärmetauschereinrichtung 200 umfasst einen Vor- oder Zulauf 210 für ein Wärme- oder Kältemittel (kurz: Kältemittel), einen Ablauf oder Rücklauf 220 für das Kältemittel und mehrere mit dem Vorlauf 210 und dem Rücklauf 220 fluidisch verbundene Wärmetauscherplatten 230. Die Wärmetauscherplatten 230 sind von dem Kältemittel durchströmbar. Um eine optimale Durchströmung zu realisieren, weisen die Wärmetauscherplatten 230 einen von zwei stirnseitigen Seitenwandungen und einer dazu mantelflächig angeordneten Wandung umgebenden Innenraum auf, der sowohl mit dem Vorlauf 210 als auch mit dem Rücklauf 220 fluidisch verbunden ist. Zur Ausbildung einer geeigneten Durchströmung sind in dem Innenraum verschiedene Strömungsleitmittel 235 angeordnet um beispielsweise ein bestimmtes Flowfield oder Strömungsfeld zu realisieren. Der Vorlauf 210 und der Rücklauf 220 sind exzentrisch zu den Wärmetauscherplatten 230 angeordnet. Dabei verlaufen der Vorlauf 210 und der Rücklauf 220 in axiale Richtung A. Das Gehäuse 110 weist weiter eine Zuführstelle 111 und eine Zapfstelle 112 auf. Wie durch die Pfeile bei 111 und 112 angedeutet, verläuft entsprechend die Zufuhr von Binäreissole 10 bzw. die Abfuhr von Binäreis.

Über die Zuführstelle 111 wird die Binäreissole 10 dem Behälter oder Gehäuse 110 zugeführt. Hierzu wird die Binäreissole 10 über eine Niveauregulierung 700 dem Gehäuse 110 zugeführt. Die Niveauregulierung 700 umfasst einen ersten Solebehälter 710 und einen zweiten Solebehälter 720. In den ersten Solebehälter 710 wird eine gesättigte Binäreissole 10 bevorratet, beispielsweise eine gesättigte Kochsalzlösung. In dem zweiten Solebehälter 720 befindet sich die Binäreissole 10 mit einer gewünschten Binäreissolenkonzentration, beispielsweise von 0,5 bis 3,5 % Kochsalzlösung (Volumen-% oder Massen-%). Um den gewünschten Konzentrationswert zu erhalten, wird die Konzentration in dem zweiten Solebehälter 720 erfasst. Liegt die Konzentration über dem gewünschten Konzentrationswert, so wird die Binäreissole 10 verdünnt, beispielsweise durch Zufuhr von Binäreissole 10 geringerer Konzentration oder von Wasser. Liegt die Konzentration unter dem gewünschten Konzentrationswert, so wird die Binäreissole 10 konzentriert, beispielsweise durch Zufuhr von Binäreissole 10 höherer Konzentration, bevorzugt mit der gesättigten Binäreissole 10 aus dem ersten Solebehälter 710. Liegt eine gewünschte Konzentration vor, so wird die Binäreissole 10 aus dem zweiten Solebehälter 720 dem Behälter 110 zugeführt. Dabei erfolgt das Zuführen entsprechend der Niveauregulierung 700. Diese regelt neben der Konzentration der Binäreissole 10, insbesondere der Binäreissole 10 in dem zweiten Solebehälter 720, auch weitere Parameter. So regelt die Niveauregulierung 700 auch einen Füllstand der Binäreissole 10 in dem Behälter 110. Dies erfolgt beispielsweise über eine Schwimmermessung, optisch oder mit anderen Mitteln. Um aus der Binäreissole 10 Binäreis herzustellen, wird die Binäreissole 10 in dem Behälter 110 gekühlt, insbesondere vorgekühlt. Hierzu umfasst die Niveauregulierung 700 einen Kälteregler bzw. einen entsprechenden Kältekreis. Dabei erfolgt die Kühlung der Binäreissole 10 durch Kontaktierung von Wärmetauscheroberflächen der Wärmetauscherplatten 230. Um Binäreis herzustellen, ist eine Durchmissung von Binäreissole 10 und kristallisierter bzw. gefrorener Binäreissole 10 erforderlich. Dies erfolgt mittels der Rühreinrichtung 500. Die Rühreinrichtung 500 umfasst einen Rührantrieb 510. Der Rührantrieb 510 umfasst eine Rührwelle 520 und eine die Rührwelle 520 antreibenden Rührmotor 530. Die Rührwelle 520 ist zentrisch zu den Wärmetauscherplatten 230 angeordnet. Hierzu weisen die Wärmetauscherplatten 230 jeweils eine zentrische Durchgangsöffnung 231 auf, durch welche sich die Rührwelle 520 erstreckt. Radial nach außen abragend weist die Rührwelle 520 Rührelemente 540 auf, die zum Durchmischen oder Rühren der Binäreissole 10 bzw. des Binäreises oder dem Gemisch aus beiden ausgebildet sind. Die Rührelemente 540 sind in den Zwischenräumen 232 zwischen den Wärmetauscherplatten 230 angeordnet. Dabei sind die Rührelemente 540 schaufelartig ausgebildet, sodass die Binäreissole 10 bzw. das Binäreis radial nach außen weg von der Rührwelle 520 in Richtung Behälterwandung 110b bewegt wird. Bevorzugt wird das eisreichere Binäreissolengemisch radial nach außen transportiert. Das eisärmere Binäreissolengemisch bzw. die Binäreissole 10 dringt durch die Durchgangsöffnungen 231 der Wärmetauscherplatten 230 nach. Auf diese Weise ist eine effiziente Durchmischung realisiert. Zudem erfolgt ein verbessertes Durchmischen aufgrund der Schrägstellung des Behälters 110 und somit der Wärmetauchereinrichtung 100 und der Rühreinrichtung 500. Die Durchmischung wird aufgrund der Schwerkraftwirkung unterstützt. Um das Binäreis bzw. die Binäreissole 10 zusätzlich zu fördern, ist die entsprechende Fördereinrichtung 600 vorgesehen. Diese ist in den hier dargestellten Ausführungsformen in die Rühreinrichtung 500 integriert, insbesondere durch die Form der Rührelemente 540. Teilweise ist die Fördereinrichtung 600 auch in die Neigungsregulierung 400 integriert, da durch die Schrägstellung eine Förderung des Binäreises bzw. der Binäreissole unterstützt wird. Aufgrund der Schrägstellung und der geringeren Dichte des Binäreises gegenüber der Binäreissole 10 bewegt sich das Binäreis von dem tiefsten Punkt, an dem die Zuführstelle 111 liegt, hin zu einer höheren Lage. An der höheren Lage ist die Zapfstelle 112 ausgebildet. Aufgrund der Schräglage ist garantiert, dass das Binäreis bzw je nach Schräglage ein Binäreisgemisch mit einerm geringeren Anteil an Binäreissole 10 an der Zapfstelle 112 anliegt und dort gezapft werden kann. Um eine Beschleunigung des Binäreisherstellungsprozesses zu bewirken, kann ein gezapftes Binäreis bzw Binäreisgemisch zurück zu der Zuführstelle 111 rückgeführt und dem Behälter 110 wieder zugeführt werden. Dabei ist beispielsweise die Schrägelage verstellbar.

Die Fig. 1 zeigt schemtisch eine Querschnittsansicht der Binäreisherstllungsvorrichtung 100. Hier ist der Aufbau grob dargetellt. Der Behälter 110 weist drei Wartungsöffnungen 113 auf. Der eingestellte Neigungswinkel beträgt etwa 10°. Der Behälter 110 ist nahezu bis zum Rand gefüllt. Angedeutete sind zwei unterschiedliche Füllstände, die sich über die Niveauregulierung 700 einstellen lassen. Die Rührwelle 520 ist an einer stirnseitigen Wandung oder Stirnseite 110a des Behälters 110 nahe der Zuführstelle 111 gelagert. An der entgegengesetzten Seite ist der Rührmotor 530 vorgesehen. Dieser befindet sich außerhalb des Behälters 110. Entsprechend durchdringt die Rührwelle 520 die zapfstellenseitige Stirnwand bzw. Stirnseite 110a des Behälters 110 und ist entsprechend abgedichtet. Aufgrund der Schräglage ist ein Druck durch die Binäreissole 10 bzw. das Binäreis auf die Abdichtung geringer als an der zuführseitigen Stirnseite 110a. Entsprechend ist durch die Schrägstellung eine Abdichtung verbessert.

Die Fig. 2 zeigt schematisch einen Ausschnitt der Binäreisherstellungsvorrichtung 100 in einer anderen Querschnittsansicht. Die Niveuregulierung 700 ist hier nicht dargstellt. Der isolierte Behälter bzw. das Gehäuse 110 ist, wie auch in Fig. 1, als dünnwandiger, etwa zylindrischer Behälter 110 mit zwei leicht nach außen gewölbten Stirnseiten 110a ausgebildet. Entsprechend erstreckt sich der Behälter 110 entlang der axialen Richtung A. Eine Mittelachse des Behälters 110 und eine Mittelachse der Rührwelle 520 sind konzentrisch zueinander ausgebildet. Die Wärmetauscherplatten 230 sind als ringkreisförmige Platten ausgebildet und ragen radial von einer gedachten Mittelachse nach außen ab. Die gedachte Mittelachse der Wärmetauscherplatten 230 ist konzentrisch zu der Mittelachse der Rührwelle 520 und des Behälters 110 angeordnet. Dabei sind die Wärmetauschserplatten 230 gleich beabstandet zueiander in die axiale Richtung A angeordnet. Radial sind die Wärmetauscherplatten 230 gleich beabstandet von der Seitenwand 110b des Behälters 110. Zwischen den Wärmetauscherplatten 230 sind die Rührelemente 540 radial nach außen ragend angeordnet. Die Rührelemente 540 sind in axiale Richtung A gleich beabstandet zueinander und im Wesentlichen gleich ausgebildet. Dabei sind die Rührelemente 540 beabstandet zu den Wärmetauscherplatten 230 für ein kontaktloses Rühren angeordnet. Die Rührelemente 540 sind in axialer Richtung A beabstandet zu der Seitenwand 110b des Behälters 110 ausgebildet.

Die Fig. 3 zeigt schematisch die Binäreisherstellungsvorrichtung 100 nach Fig. 2 in einer explosionsartigen Darstellung. Die Wärmetauschereinrichtung 200 ist bevorzugt integriert mit der Rühreinrichtung 500 ausgebildet, sodass beide gemeinsam bei der Montage in den Behälter 110 einsetzbar sind. Bevorzugt ist ein als abnehmbare Stirnwand 110a ausgebildeter Deckel 114 des Behälters 110 ebenfalls integriert mit der Wärmetauschereinrichtung 200 und/oder der Rühreinrichtung 500 ausgebildet.

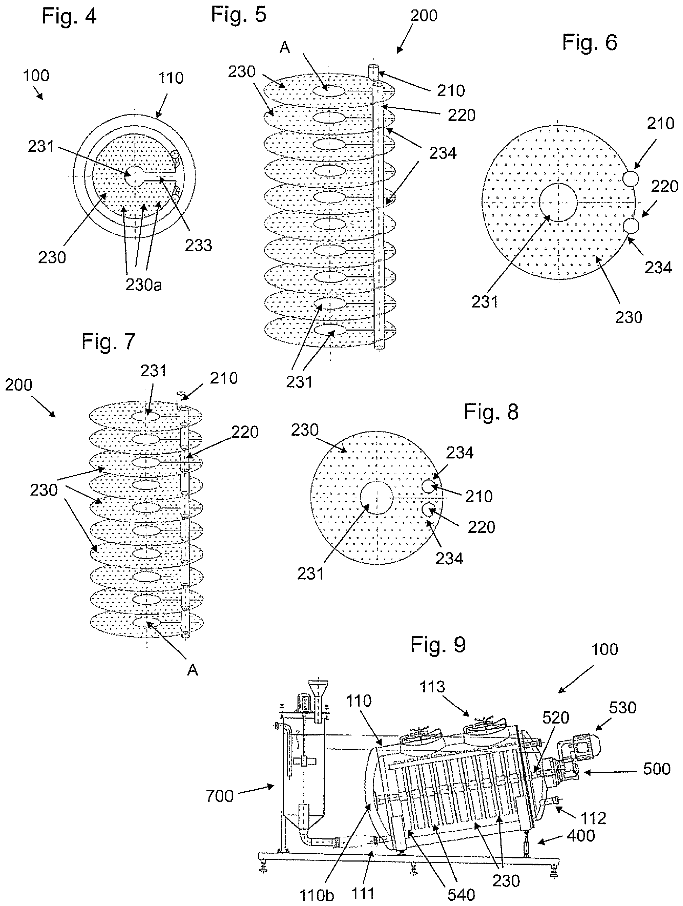

Die Fig. 4 zeigt schematisch eine andere Querschnittsansicht der Binäreisherstellungsvorrichtung 100 nach Fig. 3. In der Ansicht ist die Rühreinrichtung 500 nicht dargestellt. Der Behälter 110 ist im Wesentlichen hohlzylindrische ausgebildet. Die Wärmetauscherplatten 230 sind radial konstant beabstandet zu der Seitenwandung 110b des Behälters 110. Dabei weisen die Wärmetauscherplatten 230 die zentrische Durchgangsöffnung 231 für die Rührwelle 520 auf. Die Mittelachse der Durchgangsöffnung 231 ist konzentrisch zu der Mittelachse des Behälters 110. Die Wärmetauscherplatten 230 weisen in deren Innenraum ein Flowfield auf. Das Flowfield ist durch Schweißungen, Vertiefungen oder andere Strömungsleitmittel 235 der Wärmetauscheroberflächen in Richtung Innenraum mitdefiniert. Radial nach außen erstreckt sich von der zentrischen Durchgangsöffnung 231 ein Schlitz 233 für eine seitliche Montage der Rührwelle 540 in die Durchgangsöffnung 231. Der Zulauf 210 und der Ablauf 220 sind zwischen einem radial äußeren Rand der Wärmetauscherplatte 230 und der Seitenwandung 110b des Behälters 110 angeordnet. Der Zulauf 210 und der Ablauf 220 erstrecken sich in axialer Richtung A.

Die Fig. 5 zeigt schematische eine perspektivische Ansicht einer anderen Wärmetauschereinrichtung 200 der Binäreisherstellungsvorrichtung 100. In der hier dargestellten Ausführungsform weisen die Wärmetauscherplatten 230 keinen Schlitz 233 auf. Die Rührwelle 520 wird hier axial durch die Durchgangsöffnungen 231 eingeschoben. Der Vorlauf 210 und der Rücklauf 220 sind teilweise in den Wärmetausscherplatten 230 aufgenommen. Hierzu weisen die Wärmetauscherplatten 230 entsprechende Aufnahmen 234 auf, wie in Fig. 6 dargestellt.

Die Fig. 6 zeigt schematisch in einer Draufsicht die Wärmetauschereinrichtung 200 nach Fig. 5. Die Aufnahmen 234 für den Vorlauf 210 und den Rücklauf 220 sind an einem äußeren Rand der Wärmetauscherplatte 230 ausgebildet, wobei diese den Rand unterbrechen. Hierdurch ragt ein dort aufgenommener Zulauf 210 und/oder Rücklauf 220 noch über den Rand in Richtung Seitenwand 110b des Behälters 110 hervor. Eine fluidische Verbindung des Innenraums der Wärmetauscherplatte 230 mit dem Zulauf 210 bzw. dem Ablauf 220 erfolgt somit ohne externe Verbindungsmittel, sondern integriert.

Die Fig. 7 zeigt schematische eine perspektivische Ansicht einer anderen Wärmetauschereinrichtung 200 einer Binäreisherstellungsvorrichtung 100. Bei ansonsten gleichem Aufbau wie in dem Ausführungsbeispiel nach Fig. 5 und 6, weist die Ausführungsform nach Fig. 7 Aufnahmen 234 auf, die den Rand nicht unterbrechen, sondern als exzentrische Durchgangsöffnungen in der Wärmetauscherplatte 230 ausgebildet sind. Ein dort aufgenommener Zulauf 210 bzw. Ablauf 220 ragt nicht radial über den Rand der Wärmetauscherplatte 230 hervor. Hierdurch ist ein radialer Abstand der Wärmetauscherplatten 230 zu der Seitenwand 110b des Behälters 110 geringer zu bemessen.

Die Fig. 8 zeigt schematisch in einer Draufsicht die Wärmetauschereinrichtung 200 nach Fig. 7. Die beiden als Durchgangsöffnungen ausgebildeten Aufnahmen 234 durchdringen die Wärmetauscherplatte 230, wobei der Querschnitt der Aufnahme 234 komplett innerhalb des entsprechenden Querschnitts der Wärmetauscherplatte 230 liegt. Eine Ausführungsform der Binäreisherstellungsvorrichtung 100 mit der Wärmetauschereinrichtung 200 nach Fig. 4 ist in Fig. 9 dargestellt.

Die Fig. 9 zeigt schematisch in einer Seitenansicht die Binäreisherstellungsvorrichtung 100 mit der Wärmetauschereinrichtung 200 nach Fig. 8. Der Vorlauf 210 und der Rücklauf 220 verlaufen nicht in radialer Richtung seitlich der Wärmetauscherplatten 230, sondern durchdringen diese. Hierdurch ist ein gleichmäßiger Abstand in radialer Richtung zwischen Wärmetauscherplatten 230 und Gehäuse 110 realisiert. Im Wesentlichen entspricht der in Fig. 9 gezeigte Aufbau dem Ausführungsbeispiel nach Fig. 1. Die Binäreisherstellungsvorrichtung 100 ist kompakter ausgebildet mit einem Behälter 110 mit zwei Wartungsöffnungen 113. Die Wärmetauschereinrichtung 200 weist neun Wärmetauscherplatten 230 auf. Die Rühreinrichtung 500 weist zehn Rührelemente 540 auf.

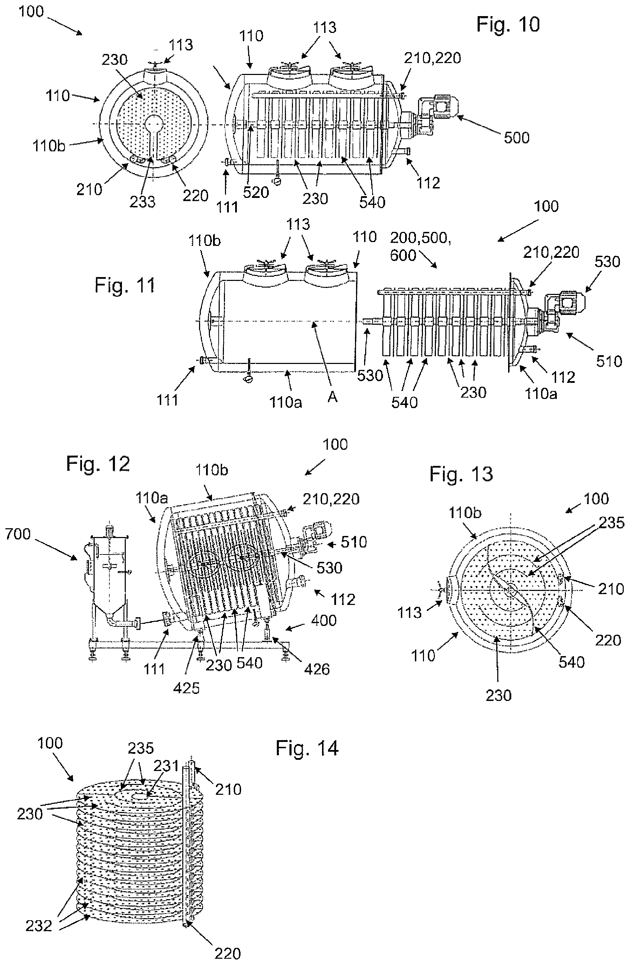

Die Fig. 10 zeigt schematisch in einer Vorderansicht und einer Seitenansicht einen Ausschnitt der Binäreisherstellungsvorrichtung 100 nach Fig. 9, jedoch mit einer Wärmetauschereinrichtung 200, welche einen Schlitz 233 zur Montage der Rührwelle 520 aufweist und bei welcher der Vorlauf 210 und der Rücklauf 220 radial seitlich zu den Wärmetauscherplatten 230 angeordnet ist. Die Fig. 11 zeigt schematisch in einer teilweise explosionsartigen Seitenansicht die Binäreisherstellungsvorrichtung 100 nach Fig. 10. Hier ist deutlich der relativ große radiale Abstand der Wärmetauscherplatten 230 zu dem Behälter 110 zu sehen, welcher mindestens der Breite in radialer Richtung des Zulaufs 210 bzw. des Ablaufs 220 entspricht.

Die Fig. 12 zeigt schematisch in einer Querschnittansicht eine andere Binäreisherstellungsvorrichtung 100. Die Binäreisherstellungsvorrichtung 100 ist gegenüber dem vorherigen Ausführungsbeispiel größer ausgelegt und weist entsprechend mehr Wärmetauscherplatten 230 auf, die zudem eine größere Wärmetauscheroberfläche aufweisen, und entsprechend mehr Rührelemente 540. Die Neigungsregulierung 400 weist ein Drehlager 425 auf, welches an einem Ende den Behälter 110 drehbar lagert. Axial beabstandet davon ist ein Linearaktor 426 ausgebildet, der flexibel mit dem Behälter 110 verbunden ist. Durch Verfahren des Linearaktors 426 ist der Neigungswinkel 410 einstellbar.

Die Fig. 13 zeigt schematisch in einer anderen Querschnittsansicht die Binäreisherstellungsvorrichtung 100. Die Rührwelle 520 ist in der zentrischen Durchgangsöffnung 231 der Wärmetauscherplatte 230 angeordnet. Der Zulauf 210 und der Ablauf 220 sind radial seitlich beabstandet zu der Wärmetauscherplatte 230 zwischen Wärmetauscherplatte 230 und Seitenwand 110b des Behälters 110 angeordnet. Radial von der Rührwelle 520 erstreckt sich das Rührelement 540. Das Rührelement 540 ist hier propellerartig oder schaufelartig ausgebildet. Dabei weist das Rührelement 540 ein im Querschnitt S-förmiges Profil auf. Zusätzlich weist das Rührelement 540 eine sich verändernde Krümmung in axiale Richtung A auf, um so eine zusätzliche Förderung in eine weitere Richtung - in axiale Richtung - zu bewirken. Auf diese Weise ist die Födereinrichtung 600 in die Rühreinrichtung 500 integriert. Das Fördern erfolgt dabei einerseits radial entlang der Wärmetauscheroberflächen. Durch die S-förmige Krümmung und die Fliehkräfte erfolgt dabei ein Fördern radial nach außen in Richtung Seitenwand 110b des Behälters 110. Zudem erfolgt ein Fördern in axiale Richtung A durch die Axialkrümmung des Rührelements 540. Somit erfolgt eine dreidimensionale Durchmischung und/oder Förderung, welche zudem durch die Schräglage der Achse A bzw. des Gehäuses 110 unterstützt wird.

Die Fig. 14 zeigt schematisch in einer perspektivischen Ansicht die Wärmetauschereinrichtung 200 der Binäreisherstellungsvorrichtung 100 nach Fig. 13. Der Vorlauf 210 und der Rücklauf 220 verlaufen radial außerhalb der Wärmetauscherplatten 230. Die Wärmetauscherplatten 230 weisen im Inneren das Strömungsfeld oder Flowfield auf. Dabei weist das Strömungsfeld als Strömungsleitmittel 235 kreisbogenartige Wandungen auf, die sich von einer Innenseite der Wärmetauscherplatte 230 zu der gegenüberliegenden Seite erstrecken. Auf diese Weise wird dem Kältemittel im Innenraum ein Strömungsweg vorgegeben. Zudem sind Vorsprünge bzw. Vertiefungen im Innenraum vorgesehen, welche eine bessere Verwirbelung des Kältemittels im Innenraum bewirken. Hierdurch ist eine effektivere Wärmeübertragung realisiert.

Die Vorrichtung ist für viele Einsatzzwecke geeignet. So lässt sich die Vorrichtung auch bei Stoffgemischen verwenden, die sich bei vorbestimmten Temperaturbereichen voneinander trennen, beispielsweise bei einem Gas-Flüssigkeitsgemisch in eine flüssige Phase und eine gasförmige Phase. So findet die Vorrichtung beispielsweise bei der Stofftrennung in Klärwerken verwendung.

Es versteht sich, dass, obwohl in der vorstehenden Zusammenfassung und der ausführlichen Beschreibung der Figuren lediglich eine beispielhafte Ausführung beschrieben wurde, eine Reihe weiterer Ausführungen existiert. Vielmehr wird die vorstehende ausführliche Beschreibung dem Fachmann als geeignete Anleitung zum Ausführen zumindest einer beispielhaften Ausführungsform nutzen.

### Bezugszeichenliste

- 10: Binäreissole
- 20: Standfläche
- 21: Standfuß
- 100: Binäreisherstellungsvorrichtung
- 110: Gehäuse (Behälter)
- 110a: Stirnseite
- 110b: Seitenwand(ung)
- 111: Zuführstelle
- 112: Zapfstelle
- 113: Wartungsöffnung
- 114: Deckel
- 200: Wärmetauschereinrichtung
- 210: Vor-/Zulauf
- 220: Rück-/Ablauf
- 230: Wärmetauscherplatte

- 231: Durchgangsöffnung
- 232: Zwischenraum
- 233: Schlitz
- 234: Aufnahme
- 235: Strömungsleitmittel

- 400: Neigungsregulierung
- 410: Neigungswinkel
- 420: Neigungselement
- 421: Standfuß
- 425: Drehlager
- 426: Linearaktor

- 500: Rühreinrichtung
- 510: Rührantrieb
- 520: Rührwelle
- 530: Rührmotor
- 540: Rührelement
- 600: Fördereinrichtung
- 700: Niveauregulierung
- 710: Solebehälter (erster)
- 720: Solebehälter (zweiter)
- A: Achse, axiale Richtung / Axialrichtung

## Patentansprüche

1. Verfahren zur kontinuierlichen Herstellung von Binäreis aus einer Binäreissole (10), umfassend die Schritte:
Einfüllen der flüssigen Binäreissole (10) in ein Gehäuse (110), Kühlen der flüssigen Binäreissole mittels Kontaktieren einer in dem Gehäuse (110) angeordneten Wärmetauschereinrichtung (200) unter Rühren der Binäreissole (10), um so das Binäreis zu erzeugen, wobei das Kühlen bei Bildung einer Eisschicht an der Wärmetauschereinrichtung (200) unterbrochen wird, sobald die Eisschicht eine vorbestimmte Dicke erreicht und das Kühlen fortgeführt wird, sobald die Eisschicht eine vorbestimmte Dicke unterschreitet, wobei die Wärmetauschereinrichtung (200) mehrere zueinander beabstandete und zumindest teilweise miteinander fluidisch verbundene Wärmetauscherplatten (230) umfasst, wobei die
Kühlung der Binäreissole (10) durch Kontaktierung von Wärmetauscheroberflächen der Wärmetauscherplatten (230) erfolgt, wobei das Rühren mittels einer Rühreinrichtung (500) erfolgt, wobei die Rühreinrichtung (500) einen Rührantrieb (510) umfasst, wobei der Rührantrieb (510) eine Rührwelle (520) und einen die Rührwelle (520) antreibenden Rührmotor (530) umfasst, wobei beim Rühren die Binäreissole (10) und/oder Eis radial entlang der Wärmetauscheroberflächen nach außen weg von der Rührwelle (520) in Richtung einer Behälterwandung (110b) bewegt wird, wobei die Rührwelle (520) zentrisch zu den Wärmetauscherplatten (230) angeordnet ist, wobei die Rührwelle (520) radial nach außen abragend Rührelemente (540) aufweist, wobei hierzu die Wärmetauscherplatten (230) jeweils eine zentrische Durchgangsöffnung (231) aufweisen, wobei das Rühren kontaktlos zu den Wärmetauscheroberflächen stattfindet, wobei die Rührelemente (540) in den Zwischenräumen (232) zwischen den Wärmetauscherplatten (230) angeordnet sind, und wobei die Rührelemente (540) schaufelartig ausgebildet sind.

2. Verfahren nach Anspruch 1, wobei eine Eisschichtdickenerfassung durchgeführt wird.

3. Verfahren nach einem der vorherigen Ansprüche 1 bis 2, wobei
das Verfahren in einer Schräglage durchgeführt wird, indem zumindest das Gehäuse geneigt wird.

4. Verfahren nach einem der vorherigen Ansprüche 1 bis 3, wobei
ein Fördern des Binäreises und/oder der Binäreissole (10) in mindestens eine Richtung, bevorzugt in mehrere Richtungen, durchgeführt wird.

5. Verfahren nach einem der vorherigen Ansprüche 1 bis 4, wobei
das Kühlen parallel und/oder seriell an mehr als zwei Oberflächen der Wärmetauschereinrichtung (200) durchgeführt wird.

6. Verfahren nach einem der vorherigen Ansprüche 1 bis 5, wobei
eine Niveauregelung durchgeführt wird, wobei die Niveauregelung eine Regelung eines Füllstandes des Behälters, eine Konzentration der Binäreissole und eine Schräglagenregelung umfasst.

7. Verfahren nach einem der vorherigen Ansprüche 1 bis 6, wobei
das Kühlen mittels eines indirekten Wärmetauscherbetriebs durchgeführt wird, wobei ein Primärkreislauf und ein Sekundärkreislauf vorgesehen sind.

8. Binäreisherstellungsvorrichtung (100) zur kontinuierlichen Herstellung von Binäreis aus einer flüssigen Binäreissole (10), wobei
Mittel zur Durchführung des Verfahrens nach einem der vorherigen Ansprüche 1 bis 7 vorgesehen sind, wobei die Mittel eine Wärmetauschereinrichtung (200) umfassen, welche mehrere zueinander beabstandete und zumindest teilweise miteinander fluidisch verbunde Wärmetauscherplatten (230) aufweist, wobei für ein Rühren nach außen dazwischen Rührelemente vorgesehen sind, die entsprechende Förder- oder Leitmittel aufweisen, wobei die Mittel eine Regeleinrichtung umfassen, um bei Überschreiten einer Binäreisschichtdicke die Wärmetauschereinrichtung (200) herunterzuregeln und bei Unterschreiten der Binäreisschichtdicke die Wärmetauschereinrichtung (200) heraufzuregeln, wobei eine zu der Wärmetauschereinrichtung (100) beabstandete Rühreinrichtung (500) zum Rühren der Binäreissole (10) und/oder des Binäreises kontaktlos zu der Wärmetauschereinrichtung (200) vorgesehen ist, wobei das Rühren mittels einer Rühreinrichtung (500) erfolgt, wobei die Rühreinrichtung (500) einen Rührantrieb (510) umfasst, wobei der Rührantrieb (510) eine Rührwelle (520) und einen die Rührwelle (520) antreibenden Rührmotor (530) umfasst, wobei die Rührwelle (520) zentrisch zu den Wärmetauscherplatten (230) angeorndet ist, wobei die Rührwelle (520) radial nach außen abragende Rührelemente (540) aufweist, wobei hierzu die Wärmetaucherplatten (230) jeweils eine zentrische Durchgangsöffnung (231) aufweisen, und wobei die Rührelemente (540) in den Zwischenräumen (232) zwischen den Wärmetauscherplatten (230) angeordnet sind und wobei die Rührelemente (540) schaufelartig ausgebildet sind.

9. Binäreisherstellungsvorrichtung (100) nach Anspruch 8, wobei
die Mittel eine Neigungsregulierung (400) umfassen, um die Binäreisherstellungsvorrichtung (100) gegenüber eine Standfläche (20) zu neigen.

10. Binäreisherstellungsvorrichtung (100) nach einem der voherigen Ansprüche 8 oder 9, wobei
die Mittel eine Fördereinrichtung (600) umfassen, um das Binäreis und/oder die Binäreissole (10) zu fördern.

11. Energiesystem, insbesondere ein Klimatisierungssystem zum Klimatisieren von Räumen oder Erwärmen von Brauchwasser, als Energiequelle für Wärmepumpensysteme, bei dem Energie und/oder Wärme aus einem latenten Energie- bzw. Wärmespeicher gezogen wird, wobei
eine Binäreisherstellungsvorrichtung (100) nach einem der vorherigen Ansprüche 8 bis 10 zur Durchführung eines Verfahrens nach einem der vorherigen Ansprüche 1 bis 7 umfasst ist, um als latenten Energie- bzw. Wärmespeicher Binäreis, insbesondere Binäreis das mit der Binäreisherstellungsvorrichtung (100) nach einem der vorherigen Ansprüche 8 bis 10 hergestellt ist, bereitzustellen.

## Claims

1. A method for the continuous production of binary ice from an ice-brine slurry (10), comprising the steps:
filling the liquid ice-brine slurry (10) in a housing (110),
cooling the liquid ice-brine slurry by means of contacting a heat exchanger device (200) arranged in the housing (110) while stirring the ice-brine slurry (10), in order to generate the binary ice in this way, wherein the cooling is interrupted upon the formation of an ice layer on the heat exchanger device (200), as soon as the ice layer has attained a predetermined thickness and the cooling is continued, as soon as the ice layer falls below a predetermined thickness,
wherein the heat exchanger device (200) comprises a plurality of heat exchanger plates (230) spaced apart from and at least partially fluidically connected to one another, wherein the cooling of the ice-brine slurry (10) occurs by contacting heat exchanger surfaces of the heat exchanger plates (230), wherein the stirring occurs by means of a stirring device (500), wherein the stirring device (500) comprises a stirring drive (510), wherein the stirring drive (510) comprises a stirring shaft (520) and a stirring motor (530) driving the stirring shaft (520), wherein during stirring the ice-brine slurry (10) and/or ice is moved radially along the heat exchanger surfaces to the outside away from the stirring shaft (520) in the direction of a container wall (110b), wherein the stirring shaft (520) is arranged centrally to the heat exchanger plates (230), wherein the stirring shaft (520) has stirring elements (540) protruding radially outward, wherein to this end the heat exchanger plates (230) each have a central through opening (231), wherein the stirring takes place without contacting the heat exchanger surfaces, wherein the stirring elements (540) are arranged in the intermediate spaces (232) between the heat exchanger plates (230), and wherein the stirring elements (540) are shovel-like.

2. The method according to claim 1, wherein an ice layer thickness detection is carried out.

3. The method according to any of the foregoing claims 1 to 2, wherein the method is carried out in a slanted position, by inclining at least the housing.

4. The method according to any of the foregoing claims 1 to 3, wherein a conveying of the binary ice and/or of the ice-brine slurry (10) is carried out in at least one direction, preferably in a plurality of directions.

5. The method according to any of the foregoing claims 1 to 4, wherein the cooling is carried out parallel and/or serially at more than two surfaces of the heat exchanger device (200).

6. The method according to any of the foregoing claims 1 to 5, wherein a level regulation is carried out, wherein the level regulation comprises a regulation of a fill level of the container, a concentration of the ice-brine slurry and a slanted position regulation.

7. The method according to any of the foregoing claims 1 to 6, wherein the cooling is carried out by means of an indirect heat exchanger operation, wherein a primary circuit and a secondary circuit are provided.

8. A binary ice production device (100) for the continuous production of binary ice from a liquid ice-brine slurry (10),
wherein means for carrying out the method according to any of the foregoing claims 1 to 7 are provided, wherein the means comprise a heat exchanger device (200), which has a plurality of heat exchanger plates (230) spaced apart from one another and at least partially fluidically connected to one another, wherein stirring elements are provided in between for a stirring to the outside, said stirring elements having corresponding conveying or conducting means, wherein the means comprise a regulating device, in order to downregulate the heat exchanger device (200) in the event of an exceeding of a binary ice layer thickness and in the case of an undershooting of the binary ice layer thickness to upregulate or the heat exchanger device (200), wherein a stirring device (500) spaced apart from the heat exchanger device (200) is provided for stirring the ice-brine slurry (10), and/or the binary ice, without contact to the heat exchanger device (200), wherein the stirring occurs by means of a stirring device (500), wherein the stirring device (500) comprises a stirring drive (510), wherein the stirring device (510) comprises a stirring shaft (520) and a stirring motor (530) driving the stirring shaft (520), wherein the stirring shaft (520) is arranged centrally to the heat exchanger plates (230), wherein the stirring shaft (520) has stirring elements (540) protruding radially outward, wherein to this end the heat exchanger plates (230) each have a central through opening (231), and wherein the stirring elements (540) are arranged in the intermediate spaces (232) between the heat exchanger plates (230), and wherein the stirring elements (540) are shovel-like.

9. The binary ice production device (100) according to claim 8, wherein the means comprise an inclination regulating unit (400), in order to incline the binary ice production device (100) vis-à-vis a standing area (20).

10. The binary ice production device (100) according to any of the foregoing claims 8 or 9, wherein the means comprise a conveying device (600) in order to convey the binary ice and/or the brine-ice slurry (10).

11. An energy system, in particular an air conditioning system for providing air conditioning to rooms or heating service water, as an energy source for heat pump systems, in which energy and/or heat is taken from a latent energy or heat storage system,
wherein a binary ice production device (100) according to any of the foregoing claims 8 to 10 for carrying out a method according to any of the foregoing claims 1 to 7 is comprised, in order to provide binary ice as a latent energy or heat storage system, in particular binary ice that is produced with the binary ice production device (100) according to the method of any of the foregoing claims 8 to 10.

## Revendications

1. Procédé pour la production continue de glace binaire à partir d'une saumure de glace binaire (10), comprenant les étapes suivantes :
verser la saumure de glace binaire (10) liquide dans un carter (110),
refroidir la saumure de glace binaire liquide au moyen d'une mise en contact d'un dispositif d'échangeur de chaleur (200) disposé dans le carter (110) tout en agitant la saumure de glace binaire (10), afin de produire ainsi la glace binaire, dans lequel le refroidissement lors de la formation d'une couche de glace sur le dispositif d'échangeur de chaleur (200) est interrompu dès que la couche de glace atteint une épaisseur prédéfinie et le refroidissement est poursuivi dès que la couche de glace passe au-dessous d'une épaisseur prédéfinie,
dans lequel le dispositif d'échangeur de chaleur (200) comprend plusieurs plaques d'échangeur de chaleur (230) espacées les unes des autres et au moins en partie reliées les unes aux autres de manière fluidique, dans lequel le refroidissement de la saumure de glace binaire (10) s'effectue par mise en contact de surfaces d'échangeur de chaleur des plaques d'échangeur de chaleur (230), dans lequel l'agitation s'effectue au moyen d'un dispositif d'agitation (500), dans lequel le dispositif d'agitation (500) comprend un entraînement d'agitation (510), dans lequel l'entraînement d'agitation (510) comprend un arbre d'agitation (520) et un moteur d'agitation (530) entraînant l'arbre d'agitation (520), dans lequel lors de l'agitation la saumure de glace binaire (10) et/ou la glace est déplacée radialement le long des surfaces d'échangeur de chaleur vers l'extérieur à distance de l'arbre d'agitation (520) en direction d'une paroi de conteneur (110b), dans lequel l'arbre d'agitation (520) est disposé de manière centrale par rapport aux plaques d'échangeur de chaleur (230), dans lequel l'arbre d'agitation (520) présente des éléments d'agitation (540) en saillie radialement vers l'extérieur, dans lequel à cet effet les plaques d'échangeur de chaleur (230) présentent respectivement une ouverture débouchante centrale (231), dans lequel l'agitation a lieu sans contact par rapport aux surfaces d'échangeur de chaleur, dans lequel les éléments d'agitation (540) sont disposés dans les espaces intermédiaires (232) entre les plaques d'échangeur de chaleur (230), et dans lequel les éléments d'agitation (540) sont réalisés à la façon de palettes.

2. Procédé selon la revendication 1, dans lequel une détection d'épaisseur de couche de glace est mise en œuvre.

3. Procédé selon l'une quelconque des revendications précédentes 1 à 2, dans lequel le procédé est mis en œuvre dans une position inclinée, du fait qu'au moins le carter est incliné.

4. Procédé selon l'une quelconque des revendications 1 à 3, dans lequel un transport de la glace binaire et/ou de la saumure de glace binaire (10) est mis en œuvre dans au moins une direction, de préférence dans plusieurs directions.

5. Procédé selon l'une quelconque des revendications précédentes 1 à 4, dans lequel le refroidissement est mis en œuvre parallèlement et/ou en série sur plus de deux surfaces du dispositif d'échangeur de chaleur (200).

6. Procédé selon l'une quelconque des revendications précédentes 1 à 5, dans lequel une régulation de niveau est mise en œuvre, dans lequel la régulation de niveau comprend une régulation d'un niveau de remplissage du contenant, une concentration de la saumure de glace binaire et une régulation de position inclinée.

7. Procédé selon l'une quelconque des revendications précédentes 1 à 6, dans lequel le refroidissement est mis en œuvre au moyen d'un fonctionnement d'échangeur de chaleur indirect, dans lequel un circuit primaire et un circuit secondaire sont prévus.

8. Dispositif de production de glace binaire (100) pour la production continue de glace binaire à partir d'une saumure de glace binaire (10) liquide,
dans lequel des moyens pour la mise en œuvre du procédé selon l'une quelconque des revendications 1 à 7 sont prévus, dans lequel les moyens comprennent un dispositif d'échangeur de chaleur (200), lequel présente plusieurs plaques d'échangeur de chaleur (230) espacées les unes des autres et au moins en partie reliées les unes aux autres de manière fluidique, dans lequel pour une agitation des éléments d'agitation sont prévus entre celles-ci vers l'extérieur, qui présentent des moyens de transport ou de guidage correspondants, dans lequel les moyens comprennent un système de régulation, afin, lors d'un dépassement d'une épaisseur de couche de glace binaire, de réguler le dispositif d'échangeur de chaleur (200) vers le bas et lors d'un passage au-dessous de l'épaisseur de couche de glace binaire de réguler le dispositif d'échangeur de chaleur (200) vers le haut, dans lequel un dispositif d'agitation (500) espacé du dispositif d'échangeur de chaleur (200) est prévu pour l'agitation de la saumure de glace binaire (10) et/ou de la glace binaire sans contact par rapport au dispositif d'échangeur de chaleur (200), dans lequel l'agitation s'effectue au moyen d'un dispositif d'agitation (500), dans lequel le dispositif d'agitation (500) comprend un entraînement d'agitation (510), dans lequel l'entraînement d'agitation (510) comprend un arbre d'agitation (520) et un moteur d'agitation (530) entraînant l'arbre d'agitation (520), dans lequel l'arbre d'agitation (520) est disposé de manière centrale par rapport aux plaques d'échangeur de chaleur (230), dans lequel l'arbre d'agitation (520) présente des éléments d'agitation (540) en saillie radialement vers l'extérieur, dans lequel à cet effet les plaques d'échangeur de chaleur (230) présentent respectivement une ouverture débouchante centrale (231), et dans lequel les éléments d'agitation (540) sont disposés dans les espaces intermédiaires (232) entre les plaques d'échangeur de chaleur (230) et dans lequel les éléments d'agitation (540) sont réalisés à la façon de palettes.

9. Dispositif de production de glace binaire (100) selon la revendication 8, dans lequel les moyens comprennent une régulation d'inclinaison (400), afin d'incliner le dispositif de production de glace binaire (100) par rapport à une surface de pose (20).

10. Dispositif de production de glace binaire (100) selon l'une quelconque des revendications précédentes 8 ou 9, dans lequel les moyens comprennent un dispositif de transport (600), afin de transporter la glace binaire et/ou la saumure de glace binaire (10).

11. Système énergétique, en particulier système de climatisation pour la climatisation d'espaces ou le chauffage d'eau industrielle, en tant que source d'énergie pour des systèmes de pompe à chaleur, pour lequel de l'énergie et/ou de la chaleur est tirée d'un accumulateur d'énergie ou de chaleur latente,
dans lequel un dispositif de production de glace binaire (100) selon l'une quelconque des revendications précédentes 8 à 10 pour la mise en œuvre d'un procédé selon l'une quelconque des revendications précédentes 1 à 7 est compris, afin de fournir en tant qu'accumulateur d'énergie ou de chaleur latente de la glace binaire, en particulier de la glace binaire qui est produite avec le dispositif de production de glace binaire (100) selon l'une quelconque des revendications précédentes 8 à 10.
